# DEMANDE DE BREVET EUROPEEN

(11) **EP 4 786 822 A1**
(43) Date de publication de la demande: **05.08.2026**
(21) Numéro de dépôt: 26155043.8
(22) Date de dépôt: 29.01.2026
(51) Int. Cl.: F16H 1/46, F16H 1/28

(54) **RÉDUCTEUR DE VITESSE À TRAINS D'ENGRENAGES ÉPICYCLOÏDAUX**

(30) Priorité: 29.01.2025 FR 2500922
(71) Demandeur: BHG, 68100 Mulhouse (FR)
(72) Inventeur: GIORDANO, Nicolas, 92700 COLOMBES (FR); BIRKER, Arnaud, 68440 DIETWILLER (FR); FRITSCH, Thomas, 67800 HOENHEIM (FR)
(74) Mandataire: Cabinet Bleger-Rhein-Poupon

(57) **Abrégé**

Réducteur de vitesse (100) comportant au moins deux étages constitués chacun d'un train d'engrenages épicycloïdal, tel que les arbres de rotation (43...) au moins des satellites (42, 42'...) du plateau porte-satellites (40) placé en sortie du réducteur (100) sont déformables, et subissent une flexion sous l'effet du déplacement de moyens support externes (4) dû au poids de la charge qui leur est appliquée, ladite flexion des arbres de rotation (43..) des satellites (42, 42'...) de l'étage de sortie étant apte à générer une composante axiale (C2), parallèle à l'axe de rotation du réducteur (100), de la force ^{©} de transmission du couple exercée entre chaque satellite (42, 42'...) de cet étage et la couronne (2) dont le sens dépend du sens de rotation des plateaux porte-satellites (10, 20, 30, 40) du réducteur (100). Une transmission d'un étage à l'autre de l'effort correspondant à ladite composante axiale (C2) est possible car les satellites (12, 12'... ; 22, 22 '... ; 32, 32'... ; 42, 42'...) sont placés en regard direct et au voisinage immédiat soit du plateau porte-satellite (10 ;20 ; 30 ; 40) d'un étage adjacent vers l'entrée du réducteur (100), soit du flasque d'entrée (1), sans séparation mécanique entre eux.

## Description

La présente invention a trait au domaine des réducteurs de vitesse rotative placés en sortie par exemple de moteurs électriques pour entraîner en rotation une charge. L'invention vise à améliorer le freinage et le blocage de ces moto-réducteurs dans des hypothèses où le poids de la charge peut induire un glissement rotatif, lorsque le moteur s'arrête ou est à l'arrêt. Elle vise par ailleurs à stabiliser le mouvement de ladite charge dans un sens de rotation dans lequel la charge ne s'oppose pas à la rotation mais la favorise.

L'un des contextes possibles d'application de la présente invention est celui des volets roulants motorisés, dans lequel le volet est entraîné par un moteur électrique dans les deux sens, à l'ouverture impliquant la montée du tablier à lames articulées du volet roulant, et à la fermeture impliquant la descente dudit tablier. Entre la sortie du moteur électrique, par exemple un moteur à courant continu sans balai (dit brushless) et la charge, en l'occurrence le volet plus ou moins enroulé autour de l'axe d'enroulement/déroulement, la vitesse de rotation doit être considérablement réduite, d'où l'utilisation d'un réducteur dont la vitesse de sortie est compatible avec l'application.

Les réducteurs à trains d'engrenages épicycloïdaux sont couramment utilisés du fait des avantages qu'ils offrent, qui sont particulièrement adaptés au contexte technique mentionné. Ils permettent en effet d'atteindre de grandes réductions de vitesse tout en étant très compact, plus petit et plus léger que d'autres types de réducteurs pour le même rapport de réduction. Ils assurent par ailleurs une bonne répartition des charges, et par conséquent une meilleure résistance aux charges élevées, ce qui réduit leur usure et augmente leur durée de vie. Ils offrent enfin des couples élevés pour leur taille.

Les réducteurs épicycloïdaux connus ne gèrent en général pas le freinage ou le blocage de la charge, gestion qui est du domaine du moteur en amont, résultant notamment de son pilotage électronique. C'est notamment le cas pour les réducteurs à trains d'engrenages épicycloïdaux décrits dans les documents US5466198A1 et US3303713A, dont les configurations des étages épicycloïdaux comportent des plateaux de fermeture entre étages, ou de fermeture d'un unique étage, pour éviter tout fléchissement des composants organisant la rotation et tout contact/frottement susceptible de ralentir la rotation.

L'invention vise à intégrer la possibilité d'une aide au freinage par le réducteur, c'est-à-dire à permettre de tirer parti des possibilités de freinage ou de blocage mécanique résultant de frottements dans le réducteur mécanique, dans le but de combiner la mise en œuvre d'un freinage électromagnétique par le moteur proprement dit avec des effets mécaniques résultant du réducteur. Elle concerne dès lors principalement un réducteur puis, comme on le verra dans la suite, un ensemble motoréducteur et sa mise en œuvre.

Le réducteur de vitesse rotative de l'invention comporte à cet effet :
- un flasque d'entrée solidaire d'un bâti et dans lequel est monté à rotation un pignon central d'entrée du réducteur de vitesse ;
- au moins deux étages constitués chacun d'un train d'engrenages épicycloïdal, chaque étage comportant :
   > un pignon central ;
   > une couronne ;
   > un ou plusieurs satellites placés entre le pignon et la couronne, chaque satellite engrenant avec la couronne et le pignon ;
   > un plateau porte-satellites auquel chaque satellite est relié à rotation ;
- ladite couronne étant commune à chaque étage, solidaire du flasque d'entrée et constituant l'enveloppe du réducteur de vitesse ;
- chaque plateau porte-satellites étant solidaire du pignon central d'un étage suivant vers la sortie du réducteur de vitesse ;
- chaque satellite étant monté rotatif sur un arbre solidarisé à un plateau porte-satellites ; et
- le plateau porte-satellites placé en sortie du réducteur de vitesse comportant sur une face extérieure, à l'opposé des satellites, des moyens support externes aptes à entraîner en rotation une charge, lesdits moyens support externes étant solidarisés audit porte-satellites.

Selon l'invention, le réducteur de vitesse rotative est d'abord tel que les arbres de rotation au moins des satellites du plateau porte-satellites placé en sortie du réducteur sont déformables, et subissent une flexion sous l'effet du déplacement des moyens support externes soumis au poids de la charge qui leur est appliquée, ladite flexion des arbres de rotation des satellites de l'étage de sortie étant apte à générer une composante axiale, parallèle à l'axe de rotation du réducteur, de la force de transmission du couple exercée entre chaque satellite de cet étage et la couronne, le sens de ladite composante axiale dépendant du sens de rotation des plateaux porte-satellites du réducteur.

Ce réducteur est ensuite tel que les satellites sont placés en regard direct et au voisinage immédiat soit du plateau porte-satellite d'un étage adjacent vers l'entrée du réducteur, soit du flasque d'entrée, sans séparation mécanique entre eux.

En fait, on tire parti d'une caractéristique propre aux réducteurs de l'invention tels que définis ci-dessus, qui réside dans l'absence de séparation mécanique entre les étages. Dans la plupart des réducteurs existants, et c'est bien le cas dans les configurations des arts antérieurs cités auparavant, chaque étage est séparé de l'étage adjacent par un capuchon ou plateau de fermeture, placé - par rapport aux satellites - du côté opposé au plateau porte-satellites, et qui vise à isoler mécaniquement l'étage, pour éviter notamment tout fléchissement des axes des satellites sous l'effet des contraintes extérieures. Une telle déformation est considérée comme parasite pour le bon fonctionnement du réducteur. Elle aboutit en effet à changer la direction de la force de transmission du couple au niveau de la couronne, qui n'est alors plus exclusivement tangentielle, et peut être décomposée en une composante axiale et une composante « efficace » tangentielle.

La composante axiale, qui permet de déplacer le satellite, peut provoquer des efforts non maîtrisés, qu'il est convenu d'éviter en pratiquant cette isolation mécanique entre étages via des capuchons intermédiaires. Lesdits capuchons segmentent le réducteur, distinguent bien chaque étage et gèrent les contraintes mécaniques de chacun indépendamment de celles qui s'appliquent éventuellement aux autres. Ils empêchent notamment toute flexion non désirée des axes des satellites, ce que ne réalise pas la configuration de la présente invention telle que présentée ci-dessus, pour des raisons qu'on verra plus en détail dans la suite. La configuration de l'invention va par conséquent à l'encontre de ce qui est généralement admis et enseigné pour la conception d'un réducteur à engrenages épicycloïdal. La solution de l'invention, qui vise à permettre la génération et la transmission de forces de frottements, consiste par conséquent en des arbres de satellites qui peuvent être déformés et en l'absence de séparation mécaniques entre étages.

Le résultat concret de cette conception sans séparation entre étages, combiné à la caractéristique de déformabilité des axes des satellites de l'invention, est le suivant : lorsque le moto-réducteur tourne dans un premier sens, en vue de remonter le tablier du volet roulant, la déformation due au poids de cette charge crée comme on l'a vu une composante axiale de la force du couple qui entraîne en pratique les satellites du dernier étage au contact du plateau porte-satellites de sortie, générant des frottements qui s'opposent à la transmission du couple. Mais compte tenu de la faible vitesse en sortie du réducteur, les forces de frottement sont très marginales et ne nuisent pas à l'efficacité de l'entraînement du tablier. Elles ne perturbent en réalité pas le fonctionnement.

A l'inverse, lorsque la charge est « menante » et tend à entraîner la sortie du réducteur dans le sens de rotation opposé, dans le sens de la descente du tablier du volet roulant, le freinage et le blocage sont rendus efficients. C'est notamment le cas lorsque le moto-réducteur retient la charge, le moteur et le tablier du volet étant arrêtés. Dans ce cas, la déformation due au poids de cette charge crée une composante axiale de la force du couple qui est de sens inverse, laquelle entraîne les satellites du dernier étage au contact du plateau porte-satellites de l'étage précédent, en direction de l'entrée du réducteur. Compte tenu de l'absence de séparation entre étages, l'ensemble des plateaux et satellites des différents étages est poussé vers l'entrée du réducteur, de sorte que les satellites de l'étage d'entrée sont plaqués contre le flasque d'entrée. Cela génère des frottements qui s'opposent à la force engendrée par la charge. Etant donné le fort rapport des vitesses à l'entrée du réducteur, les forces de frottement sont bien plus élevées et efficaces, conduisant à un blocage notamment dans l'hypothèse de l'existence d'un glissement non désiré du tablier, provoqué ou non.

Cela renforce les fonctions de freinage et de blocage mises en œuvre au niveau du moteur. Celui-ci, de nature électromagnétique, est imparfait, et lorsqu'il est seul à être implémenté, des glissements sont toujours possibles. L'invention met en réalité en oeuvre un coincement, et par conséquent, plus on insiste en tirant par exemple sur le tablier du volet roulant, plus la résistance mécanique est forte du fait de ce coincement. Le volet, lorsque le moteur est arrêté à la descente, s'arrête net. Il est à noter également que ce blocage/freinage mécanique auxiliaire présente des effets bénéfiques au niveau du moteur électrique, dont le freinage actuel, notamment mis en œuvre par court-circuitage des bobines statoriques, aboutit évidemment à augmenter considérablement leur température, du fait des courants de court-circuit très élevés qui les parcourent.

En substance, l'invention autorise, à l'encontre de la doxa en vigueur, une caractéristique technique contre intuitive, à savoir une déformation des arbres supportant au moins les satellites de l'étage de sortie, afin de bénéficier lorsque cela est utile des effets mécaniques induits dans le réducteur par les déplacements des satellites et des plateaux porte-satellites résultant de la déformation objet de l'invention. Il est à noter que la conception du réducteur utilisé dans le cadre de l'invention n'entraîne pas de coincement dans les étages intermédiaires, qui se contentent de transmettre des efforts de la sortie vers l'entrée lorsque la composante radiale est orientée vers l'entrée du réducteur.

On voit donc que le freinage mis en œuvre par l'invention n'est véritablement efficace qu'à la descente de la charge, pas à la montée de cette dernière.

De préférence, selon l'invention, la longueur L axiale des satellites du plateau porte-satellites de l'étage de sortie et le diamètre d des arbres de rotation desdits satellites de l'étage de sortie présentent un rapport r = L/d supérieur à 2,5. Ce rapport dimensionnel, constaté expérimentalement et appuyé sur des essais, joue un rôle dans la capacité des arbres à se déformer par flexion, ces arbres étant en réalité des poutres encastrées dans le porte-satellites. Le couple augmentant d'étage en étage en allant vers la sortie du réducteur, la longueur des satellites, et par conséquent des dentures, augmente et est la plus élevée dans l'étage de sortie, ce qui implique des arbres de longueur correspondante. Ces arbres de plus grande longueur sont plus susceptibles de déformation, et concourent par conséquent au mode de fonctionnement de l'invention.

De préférence encore, pour des raisons de répartition et d'équilibrage des efforts des transmission du couple, chaque étage peut comporter au moins trois satellites. En général, le nombre de satellites n'excède pas cinq satellites par étage, même si un tel nombre n'est pas limitatif tant il dépend du contexte technique d'utilisation d'un réducteur selon l'invention.

La présente invention concerne par ailleurs un moto-réducteur comprenant un moteur électrique couplé à un réducteur tel que décrit auparavant, l'arbre de sortie dudit moteur étant alors solidarisé à une pièce du réducteur portant le pignon central d'entrée dudit réducteur.

On a mentionné que le freinage mécanique pouvant résulter du fonctionnement du réducteur est utilisé en combinaison avec le freinage électromagnétique résultant du moteur électrique : pour que l'invention ait un sens, il faut en effet que le moteur électrique dispose de moyens de freinage électromagnétiques.

De préférence, le moteur électrique utilisé est un moteur sans balai.

Enfin, l'invention concerne également un ensemble moteur tubulaire comprenant un moto-réducteur selon l'invention. Un tel ensemble est particulièrement bien adapté au contexte technique des volets roulant motorisés, puisque le tube carterisant l'ensemble est alors par exemple intégré à l'intérieur de l'enroulement du tablier du volet roulant.

D'autres buts et avantages de la présente invention apparaîtront au cours de la description qui va suivre, se rapportant à un mode de réalisation qui n'est donné qu'à titre d'exemple indicatif. La compréhension de cette description sera en particulier facilitée en référence aux figures jointes en annexe et dans lesquelles :

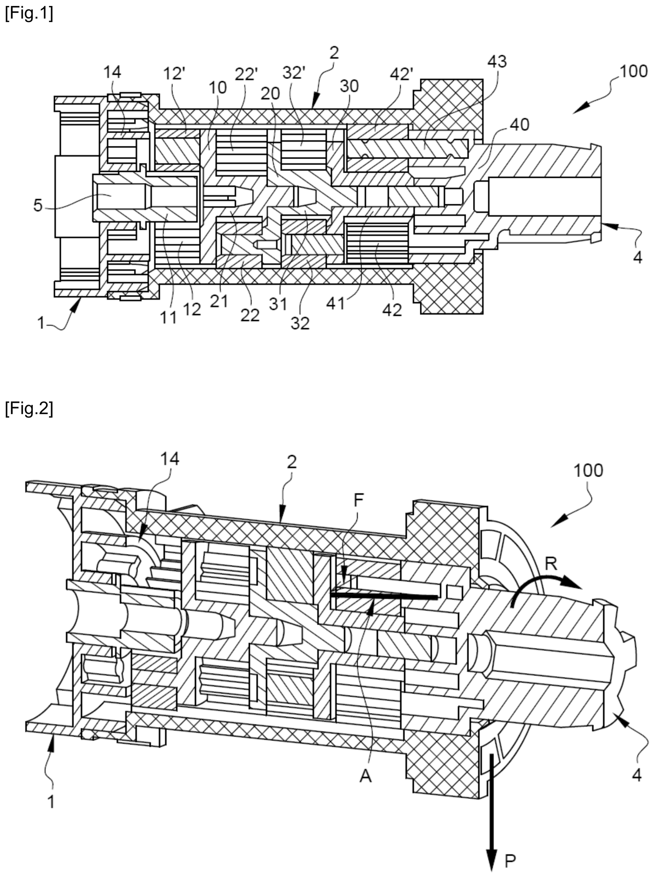

La figure 1 représente une vue en coupe longitudinale d'un réducteur selon l'invention ;
La figure 2 montre une vue en perspective coupée longitudinalement dudit réducteur, avec une représentation du poids de la charge et de la déformation de l'axe des satellites de l'étage de sortie que ce poids induit ;

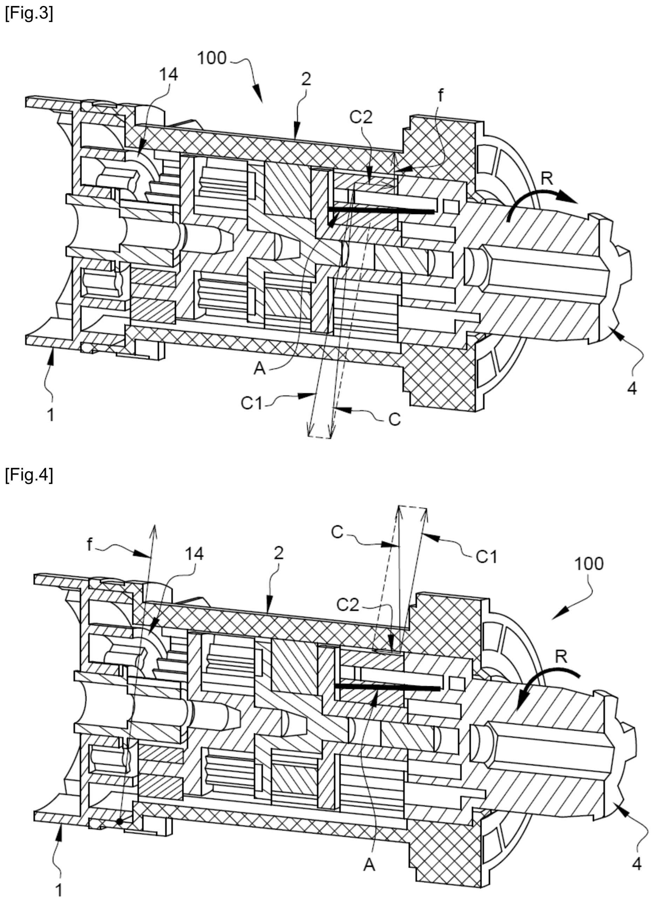

La figure 3 représente la même vue en perspective coupée longitudinalement du réducteur, lors d'un premier sens de rotation de la charge, avec représentation de la décomposition qui en résulte de la force du couple en deux composantes axiale et tangentielle du fait de la déformation de l'axe des satellites de l'étage de sortie, induisant la création de forces de frottement au niveau de l'étage de sortie du réducteur ; et
La figure 4 montre la même vue en perspective coupée longitudinalement du réducteur, avec un sens de rotation inverse de la charge, et représentation de la décomposition qui en résulte de la force du couple en deux composantes axiale et tangentielle du fait de la déformation de l'axe des satellites de l'étage de sortie, induisant cette fois la création de forces de frottement au niveau de l'étage d'entrée du réducteur.

En référence à la figure 1, le réducteur (100) représenté comporte quatre étages de réduction coaxiaux successifs, et par conséquent quatre plateaux porte-satellites (10, 20, 30, 40), quatre jeux de satellites (12, 12'..., 22, 22'..., 32, 32'..., 42, 42'...), dont deux au maximum de chaque jeu sont visibles (12, 12', 22, 22', 32, 32', 42, 42') et quatre pignons centraux (11, 21, 31, 41). Un flasque d'entrée (1) et une couronne commune (2) sont solidarisés à un bâti fixe non représenté, par exemple un carter tubulaire entourant l'ensemble constitué du moteur (non représenté) et du réducteur (100). Le fonctionnement du réducteur (100) est classique, et ne fait pas l'objet de développements particuliers ici, sinon pour pointer le fait - important au sens de la présente invention - qu'il n'y a pas de séparation mécanique entre les étages. Ainsi, les satellites (22, 22'...) attachés au plateau porte-satellites (20) sont au voisinage direct et immédiat, en vis-à-vis, du plateau porte-satellites (10) de l'étage précédent - en remontant vers le flasque d'entré (1) - c'est-à-dire qu'il n'y a pas de composants mécaniques entre eux. De même, les satellites (32, 32'...) attachés au plateau porte-satellites (30) sont au voisinage direct et immédiat, en regard, du plateau porte-satellites (20) de l'étage précédent, et ainsi de suite pour tous les satellites jusqu'en sortie du réducteur (100). Le dernier plateau porte-satellites (40) ne comporte pas de pignon central, mais des moyens support d'une charge, sous la forme d'une pièce support (4) permettant, dans l'application à des volets roulants, d'entraîner en rotation l'enroulement du tablier à lames d'un tel volet. En entrée du réducteur (100), la pièce portant le pignon central (11) du premier étage comporte un alésage (15) de liaison avec un arbre de sortie du moteur électrique placé en amont. Ledit alésage (15) et l'extrémité de l'arbre moteur comportent par exemple un méplat qui permet leur solidarisation en rotation.

En référence à la figure 2, la charge, c'est-à-dire par exemple le tablier à lames enroulé entraîné par le réducteur (100), exerce un poids qui est représenté par la flèche P. Cette force appliquée à la pièce (4) aboutit à la contraindre, et cette contrainte externe se répercute notamment aux satellites (42, 42') placés de l'autre côté, via leur liaison mécanique au plateau porte-satellites (40). Celle-ci se fait au moyen d'arbres solidarisés audit plateau porte-satellites (40), dont l'un (43) est visible sur les figures. Lorsque la rotation de la pièce (4) est dans le sens représenté par la flèche R, la flèche F montre l'effort que la charge, donc le poids P, crée au niveau des arbres des satellites, en particulier ici l'arbre (43) du satellite (42'). Cela aboutit à déformer cet arbre (43), et le trait A le schématise déformé par rapport à la direction de l'axe du réducteur (100) tel que ressortant de la figure.

La possibilité de cette déformation, qui résulte de l'invention et est conférée aux arbres (43) de liaison des satellites (42, 42'...) au plateau porte-satellites (40), a des incidences sur le fonctionnement qui apparaissent d'abord à la figure 3, avec un sens de rotation R qui n'a pas changé par rapport à la figure 2. Dans ce cas, le moto-réducteur entraîne la charge de manière à réaliser la remontée du volet. Plus précisément, pour ce faire, la pièce (4) tourne dans le sens R, et les satellites (42, 42'...) de l'étage de sortie tournent alors dans le sens opposé. Au niveau de la couronne 2, la transmission du couple génère une force C également dans le sens opposé, comme représenté. Du fait de la déformation A de l'arbre (43), cette force C peut être décomposée en une composante tangentielle C1 de transmission du couple et une composante axiale C2. Cette dernière pousse le satellite (42, 42'...) vers le plateau porte-satellites (40). Il en résulte des frottements, avec des efforts de frottements, représentés par la référence f sur la figure, et qui s'opposent à la force de transmission du couple. Cependant, compte tenu de la faible vitesse rotative en sortie du réducteur (100), ce frottement f est très réduit par rapport à la force de transmission du couple, il est véritablement marginal. Cela ne nuit pas au bon fonctionnement de l'ensemble.

Lorsque le moteur est arrêté ou en cours de freinage à la descente du volet, la charge a tendance à exercer un couple dans l'autre sens. R est alors inversé, comme cela apparaît sur la figure 4. Dans ce cas, lorsque le volet roulant est arrêté, le moteur retient la charge. Les satellites (42, 42'...) appliquent à la couronne (2) une force (C) de sens opposé. Du fait de la déformation A de l'arbre (43), cette force (C) est toujours décomposable en deux composantes tangentielle (C1) et axiale (C2) : cette fois, cependant, la composante axiale (C2) est orientée en sens inverse, vers l'entrée du réducteur (100). Il en résulte un effort qui pousse le satellite (42, 42',...) vers ladite entrée. Du fait de cette poussée, et parce qu'il n'y a pas de séparation mécanique entre les étages, l'ensemble des plateaux porte-satellites (10, 20, 30) en amont, et des satellites (12, 12'..., 22, 22'...,32, 32'...) qui y sont rattachés, est repoussé vers l'entrée. Les satellites (12, 12'...) du premier étage, en particulier, sont plaqués contre le flasque (1) d'entrée, plus précisément contre des nervures (14) de ce flasque (1), générant des frottement f de ce côté.

Ces efforts de frottement f s'opposent à la force engendrée par la charge. Compte tenu du rapport des vitesses, bien plus élevé ici qu'en sortie du réducteur (100), ces frottements f conduisent à un coincement si un déplacement relatif, par exemple un léger glissement, survient. La fonction frein, qui existe déjà au niveau du moteur électrique, comme mentionné auparavant, est renforcée et rendue plus robuste. Elle peut aussi permettre de stabiliser le déplacement du volet à la descente.

L'exemple de configuration qui fait l'objet des figures ne représente qu'une possibilité de mise en œuvre de l'invention, et ne doit pas être considéré comme exhaustif de celle-ci, qui englobe au contraire toutes possibilités de configurations dimensionnelles permettant la déformation des arbres (43...) de liaison entre les satellites (42, 42'...) du dernier étage de sortie et le plateau porte-satellites (40).

## Revendications

1. Réducteur de vitesse (100) rotative comportant :
- un flasque d'entrée (1) solidaire d'un bâti et dans lequel est monté à rotation un pignon central d'entrée (11) du réducteur de vitesse (100) ;
- au moins deux étages constitués chacun d'un train d'engrenages épicycloïdal, chaque étage comportant :
> un pignon central (11 ; 21 ; 31 ; 41);
> une couronne (2) ;
> un ou plusieurs satellites (12, 12'... ; 22, 22'... ; 32, 32'... ; 42, 42'...) placés entre le pignon (11 ; 21 ; 31 ; 41) et la couronne (2), chaque satellite (12, 12'... ; 22, 22'... ; 32, 32'... ; 42, 42'...) engrenant avec la couronne (2) et le pignon (11 ; 21 ; 31 ; 41) ;
> un plateau porte-satellites (10 ; 20 ; 30 ; 40) auquel chaque satellite (12, 12'... ; 22, 22'... ; 32, 32'... ; 42, 42'...) est relié à rotation ;
- ladite couronne (2) étant commune à chaque étage, solidaire du flasque d'entrée (1) et constituant l'enveloppe du réducteur de vitesse (100) ;
- chaque plateau porte-satellites (10 ; 20 ; 30) étant solidaire du pignon central (21 ; 31 ; 41) d'un étage suivant vers la sortie du réducteur de vitesse (100) ;
- chaque satellite (12, 12'... ; 22, 22'... ; 32, 32'... ; 42, 42'...) étant monté rotatif sur un arbre (43...) solidarisé à un plateau porte-satellites (10 ; 20 ; 30 ; 40) ; et
- le plateau porte-satellites (40) placé en sortie du réducteur de vitesse (100) comportant sur une face extérieure, à l'opposé des satellites (42, 42'...), des moyens support externes (4) aptes à entraîner en rotation une charge, lesdits moyens support externes (4) étant solidarisés audit porte-satellites (40) ; **caractérisé en ce que** les arbres de rotation (43..) au moins des satellites (42, 42'...) du plateau porte-satellites (40) placé en sortie du réducteur (100) sont déformables, et subissent une flexion sous l'effet du déplacement des moyens support externes (4) soumis au poids de la charge qui leur est appliquée, ladite flexion des arbres de rotation (43..) des satellites (42, 42'...) de l'étage de sortie étant apte à générer une composante axiale (C2), parallèle à l'axe de rotation du réducteur (100), de la force (C) de transmission du couple exercée entre chaque satellite (42, 42'...) de cet étage et la couronne (2), le sens de ladite composante axiale dépendant du sens de rotation des plateaux porte-satellites (10 ; 2 ; 30 ; 40) du réducteur (100), et **en ce que** les satellites (12, 12'... ; 22, 22'... ; 32, 32'... ; 42, 42'...) sont placés en regard direct et au voisinage immédiat soit du plateau porte-satellite (10 ; 20 ; 30 ; 40) d'un étage adjacent vers l'entrée du réducteur (100), soit du flasque d'entrée (1), sans séparation mécanique entre eux.

2. Réducteur de vitesse (100) selon la revendication 1, **caractérisé en ce que** la longueur L axiale des satellites (42, 42'...) solidaires du plateau porte-satellites (40) de l'étage de sortie et le diamètre d des arbres de rotation (43...) desdits satellites (42, 42'...) de l'étage de sortie présentent un rapport r = L/d supérieur à 2,5.

3. Réducteur de vitesse (100) selon l'une des revendications précédentes, **caractérisé en ce que** chaque étage comporte au moins trois satellites (12, 12'... ; 22, 22'... ; 32, 32'... ; 42, 42'...).

4. Moto-réducteur comprenant un moteur électrique couplé à un réducteur (100) selon l'une quelconque des revendications précédentes, l'arbre de sortie dudit moteur étant solidarisé à une pièce du réducteur (100) portant le pignon central (11) d'entrée dudit réducteur (100).

5. Moto-réducteur selon la revendication 4, dans lequel le moteur électrique dispose de moyens de freinage électromagnétiques.

6. Moto-réducteur selon l'une des revendications 4 et 5, dans lequel le moteur électrique est un moteur sans balai.

7. Un ensemble moteur tubulaire comprenant un moto-réducteur selon l'une des revendication 4 à 6.
